# EUROPEAN PATENT APPLICATION

(11) **EP 2 451 005 A1**
(43) Date of publication of application: **09.05.2012**
(21) Application number: 10793985.2
(22) Date of filing: 15.06.2010
(51) Int. Cl.: H01M 14/00, H01L 31/04

(54) **WET TYPE SOLAR BATTERY MODULE**

(30) Priority: 29.06.2009 JP 2009153680
(71) Applicant: Sharp Kabushiki Kaisha, Osaka-shi, Osaka 545-8522 (JP)
(72) Inventor: Chiba,Yasuo, Osaka 545-8522 (JP); Fuke,Nobuhiro, Osaka 545-8522 (JP); Fukui,Atsushi, Osaka 545-8522 (JP); Komiya,Ryoichi, Osaka 545-8522 (JP); Yamanaka,Ryohsuke, Osaka 545-8522 (JP); Katayama,Hiroyuki, Osaka 545-8522 (JP)
(74) Representative: Müller - Hoffmann & Partner
(86) International application number: PCT/JP2010/060086
(87) International publication number: WO 2011/001815

(57) **Abstract**

A wet solar cell module (1) includes two or more photoelectric conversion devices (30) spaced from each other and sandwiched between a first insulating substrate (10) and a second insulating substrate (20). The photoelectric conversion device (30) includes a first electrode (11), a photoelectric conversion portion (40) and a second electrode (21) that are stacked in this order on the first insulating substrate (10). One of the first electrode (11) and the second electrode (21) included in the photoelectric conversion device (30) has a through portion (50). Between respective photoelectric conversion portions (40) of two photoelectric conversion devices (30) adjacent to each other, an inter-cell insulating portion (15) extends through the through portion (50). In a space surrounded by the first insulating substrate (10), the second insulating substrate (20), and the inter-cell insulating portion (15), a carrier transporter (8) is provided.

## Description

### TECHNICAL FIELD

The present invention relates to a wet solar cell module, and particularly to a wet solar cell module with excellent durability.

### BACKGROUND ART

The solar cell converting solar energy directly into electrical energy imposes less stress on the global environment and thus has become of particular interest in recent years as a next-generation energy source replacing the fossil fuel. The solar cells that are currently in practical use include two mainstream forms, namely a solar cell in which a crystalline silicon substrate is used and a thin-film silicon solar cell. For both these two forms of solar cells, efforts are being continuously devoted to increase the efficiency of photoelectric conversion to thereby reduce the cost per output electrical energy.

The solar cell in which a crystalline silicon substrate is used, however, has a problem that the cost of producing the crystalline silicon substrate is high and therefore this type of solar cell is difficult to spread. As for the thin-film silicon solar cell, many different gases for producing the semiconductor as well as a complicated apparatus have to be used in the process of manufacturing the solar cell, resulting in a problem of a high manufacturing cost. Thus, for both forms of the solar cells, currently the problem of high manufacturing cost remains unsolved.

Accordingly, as solar cells different from the above-described two forms of solar cells, wet solar cells have been proposed. Japanese Patent Laying-Open No. 1-220380 (hereinafter referred to as "PTL 1") discloses a dye-sensitized solar cell that is one of the wet solar cells to which photo-induced electron transfer from a metal complex is applied. The dye-sensitized solar cell has a structure including a photoelectric conversion layer and an electrolyte layer. For the photoelectric conversion layer, a glass substrate having its surface on which a porous electrode is formed and a counter electrode are prepared, a photosensitized dye is adsorbed on the porous electrode, and a visible light region has an absorption spectrum.

For this dye-sensitized solar cell, light is applied to the photoelectric conversion layer from a transparent electrode side. Accordingly, the photosensitized dye included in the photoelectric conversion layer absorbs the light to generate electrons. The electrons generated here move from one electrode through an external electrical circuit to the opposite electrode. The moved electrons are transported by ions in the electrolyte to return to the photoelectric conversion layer. Such a series of electron transfer movements enables electrical energy to be continuously derived from the dye-sensitized solar cell.

Further, Japanese Patent Laying-Open No. 2008-16369 (hereinafter referred to as "PTL 2") discloses another example of the wet solar cells that is a quantum-dot-sensitized solar cell. In this quantum-dot-sensitized solar cell, quantum dots of an inorganic material, rather than the dye, are carried on a porous semiconductor layer. The structure of a photoelectric conversion device (which will simply be referred to as "cell" hereinafter depending on the case) that constitutes the quantum-dot-sensitized solar cell is identical to the structure of the dye-sensitized solar cell of above-referenced PTL 1.

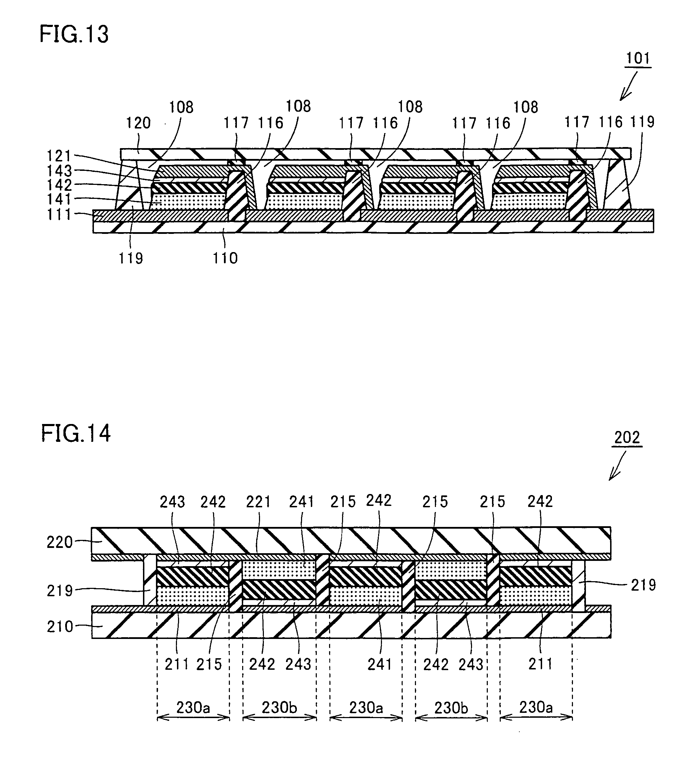

Japanese Patent Laying-Open No. 2008-16351 (hereinafter referred to as "PTL 3") proposes a dye-sensitized solar cell module in which a plurality of photoelectric conversion devices as described above are connected in series. Fig. 13 is a schematic cross section showing a structure of the dye-sensitized solar cell module disclosed in PTL 3.

In a dye-sensitized solar cell module 101 of PTL 3 as shown in Fig. 13, a first electrode 111 is formed on a first insulating substrate 110. On first electrode 111, a photoelectric conversion layer 141, a porous insulating layer 142, a catalyst layer 143, and a second electrode 121 are formed in this order. Between a plurality of photoelectric conversion devices, an inter-cell insulator 116 is provided for insulating the cells from each other. Along the outer periphery of the photovoltaic conversion devices in the dye-sensitized solar cell module, an outer peripheral portion 119 is provided.

Of two photoelectric conversion devices adjacent to each other, one photoelectric conversion device has second electrode 121 that contacts first electrode 111 of the other photoelectric conversion device, so that the photoelectric conversion devices adjacent to each other are electrically connected in series. Further, between second electrode 121 on inter-cell insulator 116 and a second insulating substrate 120, an inter-cell sealing portion 117 is formed. The material of this inter-cell sealing portion 117 partially sinks into second electrode 121 to reach inter-cell insulator 116. These inter-cell insulator 116 and inter-cell sealing portion 117 seal an electrolyte 108 on each dye-sensitized solar cell within the dye-sensitized solar cell module.

In dye-sensitized solar cell module 101 of this structure, short circuit does not occur between cells. This structure enables the number of devices integrated per chip to be increased and the photoelectric conversion efficiency to be improved. In such a dye-sensitized solar cell module 101, the direction in which electric current flows from second electrode 121 to first electrode 111 is Z-shaped, and therefore, this solar cell module is also called Z-type dye-sensitized solar cell module.

As a structure other than the above-described Z-type dye-sensitized solar cell module, Japanese Patent Laying-Open No. 2005-235725 (hereinafter referred to as "PTL 4") for example proposes a W-type dye-sensitized solar cell module. This module is called W-type dye-sensitized solar cell module since the direction in which electrons flow is W-shaped.

Fig. 14 is a schematic cross section showing a structure of the dye-sensitized solar cell module disclosed in PTL 4.

The structure of dye-sensitized solar cell module 202 of PTL 4 as shown in Fig. 14 includes a first insulating substrate 210 and a second insulating substrate 220 between which a first photoelectric conversion device 230a and a second photoelectric conversion device 230b are alternately provided and an inter-cell insulating portion 215 is held therebetween. Along the outermost part of the structure, an outer peripheral sealing layer 219 is formed. Here, in dye-sensitized solar cell module 202 shown in Fig. 14, three first photoelectric conversion devices 230a and two second photoelectric conversion devices 230b are provided.

Here, in first photoelectric conversion device 230a, a first electrode 211, a photoelectric conversion layer 241, an electrolyte layer 242, a catalyst layer 243, and a second electrode 221 are stacked on each other in this order from first insulating substrate 210 side. In contrast, in second photoelectric conversion device 230b, first electrode 211, catalyst layer 243, electrolyte layer 242, photoelectric conversion layer 241, and second electrode 221 are stacked on each other in this order from first insulating substrate 210 side. Namely, in respective structures of first photoelectric conversion device 230a and second photoelectric conversion device 230b, the order in which the layers constituting the portion between first electrode 211 and second electrode 221 are stacked is vertically opposite to each other.

First photoelectric conversion device 230a and second photoelectric conversion device 230b are electrically connected in series by using one of first electrode 211 and second electrode 221 as a common electrode.

Further, as a W-type dye-sensitized solar cell module similar to the dye-sensitized solar cell module of PTL 4, Japanese Patent Laying-Open No. 2005-228614 (hereinafter referred to as "PTL 5") discloses a dye-sensitized solar cell module in which a plurality of photoelectric conversion devices of different types are connected in series.

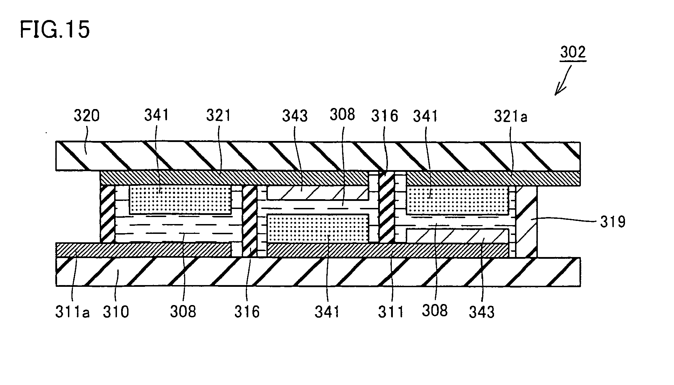

Fig. 15 is a schematic cross section showing a structure of the dye-sensitized solar cell module disclosed in PTL 5. In dye-sensitized solar cell module 302 of PTL 5 as shown in Fig. 15, a transparent second electrode 321 of the size corresponding to two cells and a transparent second electrode 321 a of the size corresponding to one cell are provided under a second insulating substrate 320. Second electrode 321 of the two-cell size is provided with a dye-sensitized semiconductor electrode 341 of the one-cell size and a translucent counter electrode 343 of the one-cell size.

In contrast, on a first insulating substrate 310; a first electrode 311a of the one-cell size and a first electrode 311 of the two-cell size are provided. First electrode 311a of the one-cell size is disposed opposite to dye-sensitized semiconductor electrode 341 formed on second insulating substrate 320. Between cells adjacent to each other, a partition 316 is formed to seal an electrolyte solution 308. Along the outer periphery of dye-sensitized solar cell module 302, a liquid sealing material 319 is formed.

Thus, in the dye-sensitized solar cell module shown in Fig. 15, the photoelectric conversion devices adjacent to each other have respective structures that are vertically opposite to each other in terms of the arrangement of the components of the photoelectric conversion portion. In the dye-sensitized solar cell module of this structure, an output voltage is derived from second electrode 321a and first electrode 311a.

### CITATION LIST

### PATENT LITERATURE

PTL 1: Japanese Patent Laying-Open No. 1-220380
PTL 2: Japanese Patent Laying-Open No. 2008-16369
PTL 3: Japanese Patent Laying-Open No. 2008-16351
PTL 4: Japanese Patent Laying-Open No. 2005-235725
PTL 5: Japanese Patent Laying-Open No. 2005-228614

### SUMMARY OF INVENTION

### TECHNICAL PROBLEM

Dye-sensitized solar cell module 101 of PTL 3 has the structure in which inter-cell insulating portion 117 sinks into second electrode 121 to reach inter-cell insulator 116 (Fig. 13). Second electrode 121, however, is likely to peel from the interface with catalyst layer 143 or inter-cell insulator 116. A resulting problem is therefore that the components of electrolyte 108 of the photoelectric conversion devices adjacent to each other move between the adjacent photoelectric conversion devices in the dye-sensitized solar cell module and are unevenly distributed, causing deterioration of the cell characteristics and module characteristics.

Respective dye-sensitized solar cell modules of PTL 4 and PTL 5 are both the W-type dye-sensitized solar cell modules separating adjacent photoelectric conversion devices (first photoelectric conversion device and second photoelectric conversion device) by an inter-cell insulator.

For example, in the W-type dye-sensitized solar cell module shown in Fig. 14, peeling is unlikely to occur at the interface between inter-cell insulating portion 215 and first insulating substrate 210 or second insulating substrate 220. In contrast, peeling is likely to occur at the interface between inter-cell insulating portion 215 and first electrode 211 or second electrode 221. Peeling occurring at these interfaces results in a problem that the components of the electrolyte are unevenly distributed to cause deterioration of the characteristics of the dye-sensitized solar cell module.

As described above, both the Z-type and W-type dye-sensitized solar cell modules have a problem that peeling occurs at the interface between constituent layers of the dye-sensitized solar cell module, which causes uneven distribution of the electrolyte components and deterioration of the characteristics of the dye-sensitized solar cell module.

A wet solar cell module of the present invention has been made in view of the current circumstances above, and an object of the invention is to improve durability by preventing interlayer peeling in the wet solar cell module.

### SOLUTION TO PROBLEM

The inventors of the present invention have repeatedly conducted thorough studies of means for preventing peeling at the interface between constituent layers of the dye-sensitized solar cell module. As a result, they have found that occurrence of peeling between the inter-cell insulating portion and each constituent layer of the dye-sensitized solar cell module is suppressed by the totally new measure to form a through portion in a first electrode and provide an inter-cell insulating portion that extends through the through portion.

Further, it has been discovered that the methodology of suppressing peeling at the interface between constituent layers of the dye-sensitized solar cell module by forming a through portion in the first electrode or the second electrode is applicable not only to the Z-type dye-sensitized solar cell module but also the W-type dye-sensitized solar cell module.

The wet solar cells include, as a structure other than the above-described dye-sensitized solar cell structure, a quantum-dot-sensitized solar cell structure as disclosed in PTL 2.

The inventors of the present invention have examined whether or not the methodology of forming a through portion in the first electrode or the second electrode constituting the above-described dye-sensitized solar cell can be applied as well to the quantum-dot-sensitized solar cell. As a result, it has found that, even if a through portion is formed in an electrode which is a constituent component of the quantum-dot-sensitized solar cell, peeling at the interface between constituent layers of the quantum-dot-sensitized solar cell is unlikely to occur as well. Thus, it has been discovered that the methodology of providing a through portion in an electrode is applicable not only to the dye-sensitized solar cell but also a wet solar cell requiring an electrolyte such as the quantum-dot-sensitized solar cell.

Specifically, a wet solar cell module of the present invention includes two or more photoelectric conversion devices spaced from each other and sandwiched between a first insulating substrate and a second insulating substrate. The photoelectric conversion devices are each constituted of a first electrode, a photoelectric conversion portion, and a second electrode. An inter-cell insulating portion is provided between the spaced and sandwiched photoelectric conversion devices. In at least one of the first electrode and the second electrode, a through portion is provided. The through portion is filled with a material of the inter-cell insulating portion. The first insulating substrate and the second insulating substrate are connected by the inter-cell insulating portion, through at least a part of a portion between the first insulating substrate and the second insulating substrate without the first electrode or the second electrode interposed.

Preferably, an inside of the through portion is filled with the material forming the inter-cell insulating portion.

Preferably, the photoelectric conversion portion contacts the inter-cell insulating portion.

Preferably, in the photoelectric conversion device, the first electrode, the photoelectric conversion portion, and the second electrode are stacked in this order on the first insulating substrate, the photoelectric conversion portion is made up of a photoelectric conversion layer, a porous insulating layer containing a carrier transporter, and a catalyst layer, the photoelectric conversion layer is a porous semiconductor layer carrying a dye, the photoelectric conversion layer, the porous insulating layer containing the carrier transporter, and the catalyst layer are stacked in this order from the first electrode, and in a space surrounded by the first insulating substrate, the second insulating substrate, and the inter-cell insulating portion, the carrier transporter is provided.

Preferably, of the two photoelectric conversion devices adjacent to each other, one photoelectric conversion device has the second electrode contacting the first electrode of the other photoelectric conversion device.

Preferably, in the wet solar cell module, the photoelectric conversion devices include at least one first photoelectric conversion device and at least one second photoelectric conversion device arranged alternately and spaced from each other and sandwiched between the first insulating substrate and the second insulating substrate, the first photoelectric conversion device and the second photoelectric conversion device each include a first electrode, a photoelectric conversion portion, and a second electrode stacked in this order on the first insulating substrate, in the photoelectric conversion portion of the first photoelectric conversion device, a photoelectric conversion layer, a porous insulating layer containing a carrier transporter, and a catalyst layer are stacked in this order from the first electrode, and in the photoelectric conversion portion of the second photoelectric conversion device, a catalyst layer, a porous insulating layer containing a carrier transporter, and a photoelectric conversion layer are stacked in this order from the first electrode.

Preferably, the first photoelectric conversion device and the second photoelectric conversion device adjacent to the first photoelectric conversion device are electrically connected in series by the first electrode or the second electrode.

Preferably, the second electrode is made of a material having corrosion resistance against the carrier transporter.

Preferably, the second electrode is made of at least one metal selected from the group consisting of Ti, Ni, and Au, a compound containing at least one metal selected from the group of metals, fluorine-doped tin oxide, or ITO.

Preferably, an outer peripheral sealing layer is formed along an outer peripheral portion of two or more photoelectric conversion devices and between the first insulating substrate and the second insulating substrate.

Preferably, the inter-cell insulating portion includes at least an inter-cell sealing portion.

Preferably, the inter-cell insulating portion is made up of an inter-cell insulator and an inter-cell sealing portion.

### ADVANTAGEOUS EFFECTS OF INVENTION

In accordance with the present invention, occurrence of peeling between layers constituting the wet solar cell module can be suppressed, and the wet solar cell module having excellent durability can be provided.

### BRIEF DESCRIPTION OF DRAWINGS

Fig. 1 is a schematic cross section of a wet solar cell module in a first embodiment.
Fig. 2 is a schematic diagram showing a first electrode and an insulating portion provided on a first insulating substrate.
Fig. 3 is a schematic diagram showing a second electrode and a through portion provided on a second insulating substrate.
Fig. 4 is a schematic plan view of the wet solar cell module in the first embodiment before a through portion is provided in the second electrode, as seen from the second electrode side.
Fig. 5 is a schematic plan view showing an example of the second electrode after a thorough portion is provided therein, as seen from the upper side of the second electrode.
Fig. 6 is a schematic plan view showing an example of the second electrode after a thorough portion is provided therein, as seen from the upper side of the second electrode.
Fig. 7 is a schematic plan view showing an example of the second electrode after a thorough portion is provided therein, as seen from the upper side of the second electrode.
Fig. 8 is a schematic cross section of a wet solar cell module in a second embodiment.
Fig. 9 is a schematic cross section of a wet solar cell module in a third embodiment.
Fig. 10 is a schematic cross section of a wet solar cell module in a fourth embodiment.
Fig. 11 is a schematic cross section of a wet solar cell module in a fifth embodiment.
Fig. 12 shows (A) a schematic plan view of a first insulating substrate of a wet solar cell module of an Example, as seen from a first electrode side, and (B) a schematic plan view of a second insulating substrate, as seen from a second electrode side.
Fig. 13 is a schematic cross section of a conventional dye-sensitized solar cell module.
Fig. 14 is a schematic cross section of a conventional dye-sensitized solar cell module.
Fig. 15 is a schematic cross section of a conventional dye-sensitized solar cell module.

### DESCRIPTION OF EMBODIMENTS

A wet solar cell module of the present invention has a feature that at least one of a first electrode and a second electrode includes a through portion and the through portion is filled with a material constituting an inter-cell insulating portion. A first insulating substrate and a second insulating substrate thus contact each other through the inter-cell insulating portion, and accordingly the durability of the wet solar cell module can be enhanced.

The above-described feature that a through portion is provided in the first electrode or the second electrode is applicable to both the Z-type wet solar cell module and the W-type wet solar cell module. In the following, in connection with a first embodiment and a second embodiment each, a wet solar cell module of the Z type will be described and, in connection with third to fifth embodiments each, a wet solar cell module of the W type will be described.

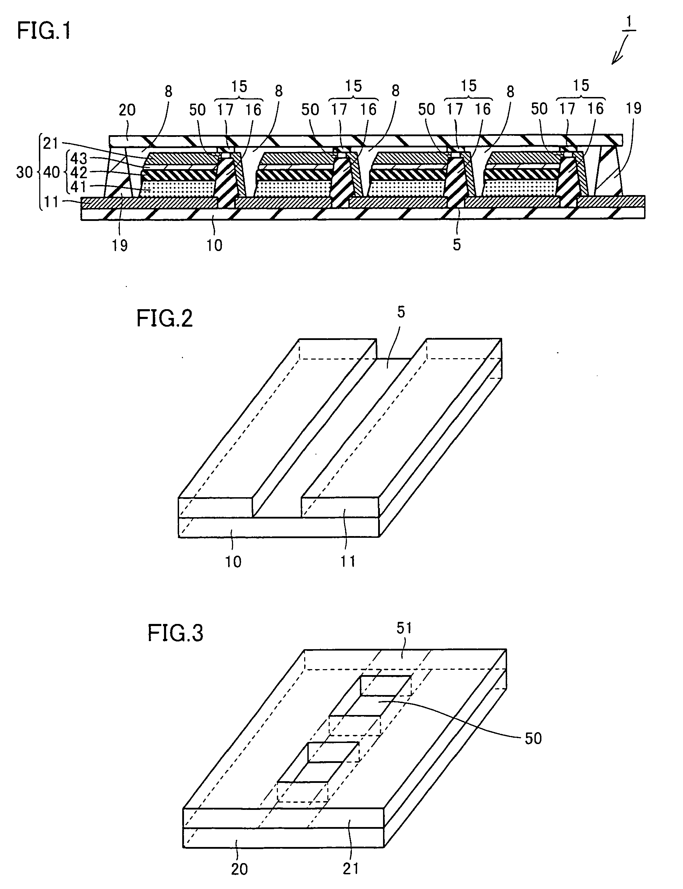

The form of the wet solar cell module of the present invention is not limited to the one shown in Fig. 1, and various modifications are still encompassed in the scope of the present invention. In the drawings referenced below, the same reference characters denote the same or corresponding components.

### <Wet Solar Cell Module>

### First Embodiment

Fig. 1 is a schematic cross section showing a wet solar cell module in a first embodiment. The wet solar cell module of the present embodiment as shown in Fig. 1 is a wet solar cell module 1 of the Z type having a structure in which two or more photoelectric conversion devices 30 spaced from each other are sandwiched between a first insulating substrate 10 and a second insulating substrate 20, and an outer peripheral sealing layer 19 is formed along the outer periphery thereof. Photoelectric conversion device 30 is configured in such a manner that a first electrode 11, a photoelectric conversion portion 40, and a second electrode 21 are stacked in this order on first insulating substrate 10.

Here, between respective photoelectric conversion portions 40 of two photoelectric conversion devices 30 adjacent to each other, an inter-cell insulating portion 15 is provided, and inter-cell insulating portion 15 extends through a through portion 50 provided in second electrode 21 to contact second insulating substrate 20. Here, inter-cell insulating portion 15 is made up of an inter-cell sealing portion 17 and an inter-cell insulator 16. Further, in a space located between first insulating substrate 10 and second insulating substrate 20 and separated by inter-cell insulating portion 15, a carrier transporter 8 is provided.

Above-described photoelectric conversion portion 40 is made up of a photoelectric conversion layer 41, a porous insulating layer 42 containing the carrier transporter and a catalyst layer 43. Photoelectric conversion layer 41, porous insulating layer 42, and catalyst layer 43 are characterized by that they are stacked in this order from the first electrode 11 side. Here, photoelectric conversion layer 41 is a porous semiconductor layer carrying a dye. In the case where the wet solar cell is a quantum-dot-sensitized solar cell, quantum dots of an inorganic material are carried on the porous semiconductor layer. Since the description here is given regarding the dye-sensitized solar cell, the one carrying a dye will be described.

Each of the components constituting the wet solar cell module in the first embodiment will hereinafter be described.

### <First Insulating Substrate, Second Insulating Substrate>

In the present embodiment, first insulating substrate 10 and second insulating substrate 20 are provided for supporting two or more photoelectric conversion devices 30, and formed to serve as a light-receiving surface and a non-light-receiving surface of the wet solar cell module.

Here, in order to take external light into photoelectric conversion device 30, a translucent substrate is used as one of first insulating substrate 10 and second insulating substrate 20 that is to serve as the light-receiving surface of wet solar cell module 1. Namely, it is a feature that at least one of first insulating substrate 10 and second insulating substrate 20 to be used is translucent.

Here, since photoelectric conversion layer 41 which is a constituent component of photoelectric conversion portion 40 is provided on the first insulating substrate 10 side, preferably first insulating substrate 10 is translucent so that the first insulating substrate 10 side surface serves as the light-receiving surface of the wet solar cell module. The first insulating substrate 10 side surface can thus be used as the light-receiving surface of the wet solar cell module to thereby reduce loss of the light taken in the wet solar cell module.

The material used for first insulating substrate 10 and second insulating substrate 20 is not particularly limited as long as it has a heat resistance against the process temperature at which the porous semiconductor layer is formed and has electrical insulation. Any material may be used including for example glass substrate, heat-resistant resin sheet such as flexible film, ceramic substrate, and the like.

In the case where a paste containing ethyl cellulose is used for the porous semiconductor layer, the material used for first insulating substrate 10 and second insulating substrate 20 is preferably a material having a heat resistance of approximately 500°C. In the case where a paste without containing ethyl cellulose is used for the porous semiconductor layer, the material used for first insulating substrate 10 and second insulating substrate 20 is preferably a material having a heat resistance of approximately 120°C.

Further, for first insulating substrate 10 and second insulating substrate 20, preferably a material having a low moisture permeability is used in order to prevent volatilization of a solvent in the carrier transporter. Further, it is more preferable to coat one of the front and rear surfaces of first insulating substrate 10 or second insulating substrate 20 with a material having a low moisture permeability such as SiO₂ It is still more preferable to coat both surfaces of first insulating substrate 10 or second insulating substrate 20 with a material having a low moisture permeability such as SiO₂.

### <First Electrode>

In the present embodiment, first electrode 11 is provided for transporting electrons generated in photoelectric conversion layer 41 to an external circuit. As a material used for first electrode 11, preferably transparent conductive metal oxide, metal, carbon or the like is used. Among these materials, transparent conductive metal oxide is more preferably used since it has transparency. In the case where materials without transparency such as the above-mentioned metal and carbon are used, preferably these materials are used in the form of a thin film so that they have optical transparency.

Here, examples of the transparent conductive metal oxide used for first electrode 11 may include ITO (indium-tin complex oxide), fluorine-doped tin oxide, zinc oxide doped with boron, gallium, or aluminum, titanium oxide doped with niobium or tantalum, and the like.

Further, examples of the metal used for first electrode 11 may include gold, silver, aluminum, indium, and the like. In the case where a metal that is prone to be corroded by an electrolytic solution, as compared with other metals, is used, preferably first electrode 11 that contacts the carrier transporter is coated with a corrosion-resistant material. Further, examples of the carbon used for first electrode 11 may include carbon black, carbon whisker, carbon nanotube, fullerene, and the like.

Preferably the film thickness of first electrode 11 is not less than 0.02 µm and not more than 5 µm. If the film thickness of first electrode 11 is less than 0.02 µm, electrical conduction of the wet solar cell module may not sufficiently be ensured. If the film thickness of first electrode 11 is larger than 5 µm, the film resistance of first electrode 11 may be large.

A lower film resistance of first electrode 11 is preferred, in order to increase the output of the wet solar cell module. The film resistance is preferably not more than 40 Ω2/sq for example.

Such a first electrode 11 may be formed by a conventionally-known method, as long as the method can provide a plurality of first electrodes 11 spaced from each other on first insulating substrate 10 as shown in Fig. 1. and may be formed for example by sputtering method, spray method, or the like.

Such a plurality of first electrodes 11 may be formed in the form of a pattern, or one un-divided electrically conductive layer may be formed and then the conductive layer may be partially removed so that it is divided into a plurality of first electrodes 11.

As a method of forming first electrode 11 in the form of a pattern, any conventionally-known method may be used, and examples of the method may include for example a method of forming the first electrode using a metal mask or a tape mask, photolithography, and the like.

As a method of forming a plurality of first electrodes 11 by removing a part of the conductive layer, any of conventionally-known physical methods and chemical methods may be used. Examples of the physical methods may for example include laser scribing, sand blasting, and the like, and examples of the chemical methods may for example include solution etching, and the like.

### <Second Electrode>

In the present embodiment, second electrode 21 is provided for electrically connecting catalyst layer 43 of one of two photoelectric conversion devices 30 adjacent to each other and first electrode 11 of the other photoelectric conversion device 30.

For such a second electrode 21, any material may be used without particular limitation as long as it is electrically conductive. Preferably a metal with high electrical conduction or a transparent conductive material is used. It should be noted, however, that in the case where a highly corrosive halogen-based redox species is used for the carrier transporter, preferably a corrosion-resistant material is used for second electrode 21. By thus using a corrosion-resistant material for second electrode 21, long-lasting stability of second electrode 21 can be ensured. Examples of such a corrosion-resistant material may include for example a refractory metal such as Ti, Ta.

The material used for second electrode 21 is not limited to the corrosion-resistant materials as described above. For example, at least one selected from the group consisting of Ti, Ni, Au, and compounds (including alloys) of these metals, or a transparent conductive film material may be used. Examples of the transparent conductive film material used for second electrode 21 may include indium oxide (ITO), fluorine-doped tin oxide (F:SnO₂), and the like.

It should be noted that, since second electrode 21 contacts carrier transporter 8 of adjacent photoelectric conversion device 30, it is not preferable to use, for the second electrode, a material that promotes a redox reaction such as carbons and platinum group, for the reason that contact of second electrode 21 with carrier transporter 8 induces a redox reaction, which possibly results in internal short circuit.

Depending on the timing at which the dye is adsorbed on the porous semiconductor layer, the preferred form of second electrode 21 varies. For example, in the case where second electrode 21 is formed and thereafter the dye is adsorbed on the porous semiconductor layer, it is preferable to form second electrode 21 in the form of a mesh having many holes, so that adsorption of the dye on the porous semiconductor layer is facilitated. In contrast, in the case where the dye is adsorbed on the porous semiconductor layer and thereafter second electrode 21 is formed on the porous insulating layer, second electrode 21 may be of any form without particular limitation. Examples of the method of forming second electrode 21 may include for example electron beam evaporation, sputtering, CVD, screen printing, and the like.

### <Inter-Cell Insulating Portion>

In the present embodiment, inter-cell insulating portion 15 is provided, in order to (a) block redox species in the carrier transporter from moving between photoelectric conversion devices 30 adjacent to each other, (b) prevent occurrence of internal short circuit due to contact between first electrode 11 and second electrode 21 in the same photoelectric conversion device 30, and (c) prevent occurrence of internal short circuit due to contact between respective first electrodes 11 of photoelectric conversion devices 30 adjacent to each other.

Such an inter-cell insulating portion 15 is formed of an insulating material, and provided so that it extends from a surface of first insulating substrate 10 between first electrodes 11 adjacent to each other (namely from insulating portion 5) through the through portion 50 of second electrode 21 to contact second insulating substrate 20. Namely, inter-cell insulating portion 15 is formed to contact first electrode 11, second electrode 21, first insulating substrate 10, and second insulating substrate 20.

Regarding blockage of movement of redox species in the carrier transporter between photoelectric conversion devices 30 adjacent to each other, a further description will be given. The wet solar cell module of the present embodiment as shown in Fig. 1 includes a plurality of first electrodes 11 that have respective potentials different from each other, and therefore has a problem that redox species in carrier transporter 8 move between photoelectric conversion devices 30 adjacent to each other. In view of this, inter-cell insulating portion 15 is used to separate photoelectric conversion devices 30 from each other to thereby enable inhibition of movement of redox species in the carrier transporter between photoelectric conversion devices 30 adjacent to each other, and prevention of uneven distribution of the redox species.

Such an inter-cell insulating portion 15 as shown in Fig. 1 has at least inter-cell sealing portion 17, and is preferably made up of inter-cell insulator 16 and inter-cell sealing portion 17.

Examples of the method of forming inter-cell insulating portion 15 may include a method that applies a paste containing semiconductor particles onto first insulating substrate 10, thereafter bakes the paste to thereby form inter-cell insulator 16 and form inter-cell sealing portion 17 on this inter-cell insulator 16. The method of applying a paste containing semiconductor particles may include screen printing method, ink jet method, and the like.

The form of such an inter-cell insulating portion 15 may be any and is not particularly limited, as long as it is a film that is dense to such an extent that prevents redox species from passing through inter-cell insulating portion 15. The dense film here may for example be a porous material with closed cells. In the following, a description will be given of inter-cell insulator 16 and inter-cell sealing portion 17 constituting inter-cell insulating portion 15.

### Inter-Cell Insulator

For inter-cell insulator 16, preferably a high-resistance material is used, and more preferably an inorganic oxide is used. Examples of such an inorganic oxide may include for example silicon oxide, boron oxide, zinc oxide, lead oxide, bismuth oxide, titanium oxide, aluminum oxide, magnesium oxide, and the like.

### Inter-Cell Sealing Portion

Inter-cell sealing portion 17 is provided for blocking redox species included in the carrier transporter from moving between photoelectric conversion devices 30 adjacent to each other, and is provided on inter-cell insulator 16 to contact second insulating substrate 20. Therefore, preferably inter-cell sealing portion 17 is a film that is dense to such an extent that prevents redox species in the carrier transporter from passing through the inside of inter-cell sealing portion 17.

Such an inter-cell sealing portion 17 is fixed by being attached to inter-cell insulator 16, second electrode 21, and second insulating substrate 20 by bonding. By thus providing inter-cell sealing portion 17, a seal between second electrode 21 and second insulating substrate 20 and a seal between inter-cell insulator 16 and second insulating substrate 20 can be made.

As a material that forms inter-cell sealing portion 17, preferably photosensitive resin, thermosetting resin or the like is used, since such materials sufficiently ensure the points of contact of inter-cell sealing portion 17 with second electrode 21, second insulating substrate 20, and inter-cell insulator 16 and they are insulating materials that provide good adherence at these points of contact. By using such a material, inter-cell insulating portion 15 can be formed by filling through portion 50 with inter-cell insulating portion 15, regardless of the shape of through portion 50.

As a method of forming inter-cell sealing portion 17, any conventionally-known method may be used, such as screen printing method and ink jet method, for example. In the case where such a method is used to form inter-cell sealing portion 17, a photosensitive resin may be applied and thereafter irradiated with light to be hardened, and thereby form inter-cell sealing portion 17, or a thermosetting resin may be applied and thereafter heated to be hardened, and thereby form inter-cell sealing portion 17.

After thus applying the photosensitive resin or thermosetting resin and allowing it to flow into through portion 50, the resin may be cured to form inter-cell sealing portion 17, and accordingly through portion 50 can be filled with inter-cell sealing portion 17.

### <Outer Peripheral Sealing Layer>

In the present embodiment, outer peripheral sealing layer 19 is preferably provided in order to (a) receive and absorb falling objects and stress (impact) acting on the wet solar cell module, (b) absorb deformation such as warp acting on the wet solar cell module in long-term use, (c) suppress volatilization of the electrolytic solution of the carrier transporter, and (d) prevent ingress of water and the like into the wet solar cell module.

As a material that forms such an outer peripheral sealing layer 19, one of or a combination of two or more of materials such as hot-melt resin (ionomer resin for example), silicone resin, epoxy resin, polyisobutylene-based resin, glass frit may be used. The layer structure of outer peripheral sealing layer 19 is not limited to a single layer, and two or more layers may be stacked to form outer peripheral sealing layer 19. It should be noted that, in the case where nitrile-based solvent or carbonate-based solvent is used as a solvent that forms the carrier transporter, it is particularly preferable to use silicone resin, hot-melt resin, polyisobutylene-based resin, glass frit, or the like.

In the case where silicone resin, epoxy rein, and glass frit are used as the material forming outer peripheral sealing layer 19, a dispenser may be used to form a pattern of outer peripheral sealing layer 19. In the case where a hot-melt resin is used as the material forming outer peripheral sealing layer 19, a patterned hole may be opened in a sheet-like hot-melt resin to thereby form a pattern of outer peripheral sealing layer 19.

Further, the thickness in the direction of the layer of outer peripheral sealing layer 19 may be set as appropriate depending on the film thickness of each constituent layer of the photoelectric conversion device.

### <Photoelectric Conversion Layer>

In the present embodiment, photoelectric conversion layer 41 is generally a layer in which a dye contained in photoelectric conversion layer 41 absorbs light to generate electrons, and formed, for example, of a porous semiconductor layer carrying a dye. A description will be given below of the porous semiconductor layer and the dye that constitute the photoelectric conversion layer.

### Porous Semiconductor Layer

In the present embodiment, the porous semiconductor layer is made up of one conventionally-known semiconductor or a combination of two or more different conventionally-known semiconductors, and may be formed in any conventionally-known form. For example, the porous semiconductor layer may be formed in the form of particles or a film. The porous semiconductor layer, however, is preferably formed in the form of a film, in order to efficiently take light into the photoelectric conversion layer.

As a semiconductor(s) forming such a porous semiconductor layer, one semiconductor or two or more different semiconductors such as titanium oxide and zinc oxide may be used, for example. In particular, in view of conversion efficiency, stability, and safety, titanium oxide is preferably used.

Here, as a method of forming the porous semiconductor layer in the form of a film on first electrode 11, a conventionally-known method may be used. An example of the method may be a method that applies a paste containing semiconductor particles using the screen printing method, ink jet method, or the like, and thereafter bakes the applied paste. Among these methods of forming the porous semiconductor layer, the screen printing method is preferably used, since it is easy to increase the film thickness and the manufacturing cost is reduced.

Further, the film thickness of the porous semiconductor layer may be any thickness without being particularly limited. The thickness, however, is preferably approximately 5 to 50 µm, in order to increase the conversion efficiency of photoelectric conversion layer 41.

Further, in order to allow a larger number of dye particles to be adsorbed on the porous semiconductor layer, preferably the porous semiconductor layer has a large specific surface area, and more preferably the specific surface area is 10 m²/g to 200 m²/g. The specific surface area of the porous semiconductor layer can thus be increased so that a larger number of dye particles is adsorbed on the porous semiconductor layer to thereby increase the conversion efficiency of photoelectric conversion layer 41. The specific surface area herein refers to a value measured by the BET adsorption method.

Further, as semiconductor particles forming the porous semiconductor layer, preferably commercially available semiconductor particles having an appropriate average size are used. More preferably, particles of one semiconductor or a semiconductor compound having an average particle size of approximately 1 nm to 500 nm for example are used.

Such a porous semiconductor layer is dried and baked under the conditions such as temperature, time, and atmosphere that are adjusted appropriately depending on the material used for the first insulating substrate and the type of the semiconductor particles. The porous semiconductor layer is dried and baked preferably at a temperature of approximately 50 to 800°C. The layer may be dried and baked once at a single temperature, or twice or more by changing the temperature to two or more different temperatures. Further, preferably the layer is dried and baked for approximately 10 seconds to four hours. As for the atmosphere in which the layer is dried and baked, preferably the layer is dried and baked in the air or in an inert gas atmosphere.

### Dye

In the present embodiment, the dye adsorbed on the porous semiconductor layer functions as a photosensitizer. Various dyes having an absorption band in the visible light region and/or infrared region may be used. In order to allow the dye to be firmly adsorbed on the porous semiconductor layer, preferably a dye whose molecules have an interlock group is used.

A dye having an interlock group can thus be used so that the interlock group is located at the plane of contact between the porous semiconductor layer and the dye, to thereby form an electrical coupling between the excited dye and the conduction band of the semiconductor which forms the porous semiconductor layer. In this way, movement of electrons between the porous semiconductor layer and the dye can be facilitated.

Examples of such an interlock group may include carboxyl group, alkoxy group, hydroxyl group, sulfone group, ester group, mercapto group, phosphonyl group, and the like. In particular, dyes having, as interlock groups, carboxyl group, hydroxyl group, sulfone group, and phosphonyl group are preferably used. More preferably, a dye having a carboxyl group is used.

Examples of such a dye having an interlock group may include, for example, ruthenium bipyridine based dye, azo based dye, quinone based dye, quinonimine based dye, squarylium based dye, cyanine based dye, merocyanine based dye, porphyrin based dye, phthalocyanine based dye, indigo based dye, naphthalocyanine based dye, and the like.

The method of causing the porous semiconductor layer to adsorb the dye may include a method that immerses first electrode 11 on which the porous semiconductor layer is formed, in a solution in which the dye is dissolved (the solution is hereinafter also referred to as "dye adsorption solution").

Here, the solvent used for the dye adsorption solution may be any as long as it can dissolve the dye. Examples of the solvent may include alcohols, ketons, ethers, nitrogen compounds, halogenated aliphatic hydrocarbon, aliphatic hydrocarbon, aromatic hydrocarbon, esters, water, and the like. A mixture of two or more of these solvents may also be used.

Here, ethanol may be used as an example of the alcohols. Acetone may be used as an example of the ketons. Diethyl ether, tetrahydrofuran, and the like may be used as examples of the ethers. Acetonitrile may be used as an example of the nitrogen compounds. Chloroform may be used as the halogenated aliphatic hydrocarbon, hexane may be used as the aliphatic hydrocarbon, benzene may be used as the aromatic hydrocarbon, ethyl acetate, butyl acetate, and the like may be used as examples of the esters.

The concentration of the dye in this dye adsorption solution may be adjusted as appropriate depending on the type of the dye and the type of the solvent to be used. In order to improve adsorption capability, a higher concentration is preferred. Preferably, the concentration is 1×10⁻⁵ mol/L or more, for example.

### <Porous Insulating Layer>

In the present embodiment, porous insulating layer 42 may be provided for blocking photoelectric conversion layer 41 and catalyst layer 43 from being electrically connected. Such a porous insulating layer 42 is preferably formed on photoelectric conversion layer 41 without leaving a space so that photoelectric conversion layer 41 and catalyst layer 43 do not contact each other.

Further, in order to block photoelectric conversion layer 41 and catalyst layer 43 from being electrically connected to each other, preferably a high-resistance material is used for porous insulating layer 42. More preferably, an oxide semiconductor is used as one of high-resistance materials. Still more preferably, an oxide semiconductor or a combination of two or more oxide semiconductors selected from the group consisting of zirconium oxide, magnesium oxide, aluminum oxide, and titanium oxide, is used.

Porous insulating layer 42 is preferably a porous material having open cells therein, in order to take in redox species (electrolyte) in the carrier transporter and move the redox species (electrolyte).

Further, as a way to block photoelectric conversion layer 41 and catalyst layer 43 from being electrically connected to each other, reduction of the contact area between photoelectric conversion layer 41 and catalyst layer 43 may also be used. In the case where the contact area between photoelectric conversion layer 41 and catalyst layer 43 is reduced, preferably the surface area of porous insulating layer 42 is reduced. Examples of the method of reducing the surface area of porous insulating layer 42 may include a method that makes the surface of microparticles less uneven that form a material for the porous insulating layer, a method that increases the size of microparticles that form a material for the porous insulating layer, and the like.

For porous insulating layer 42. preferably a high-refractive-index material is used in order to increase the conversion efficiency of the photoelectric conversion device. A high-refractive-index material can thus be used for porous insulating layer 42 to thereby reflect external light having passed through photoelectric conversion layer 41 and allow the light to enter again photoelectric conversion layer 41.

Porous insulating layer 42 can be formed by applying a paste containing semiconductor particles and thereafter baking it. Examples of the method of applying a paste containing semiconductor particles may include screen printing method, ink jet method, and the like. In the case where the film thickness of porous insulating layer 42 is too small, the process of forming the layer may be performed twice or more to increase the thickness of porous insulating layer 42 and thereby avoid contact between photoelectric conversion layer 41 and catalyst layer 43.

### <Catalyst Layer>

In the present embodiment, catalyst layer 43 may be provided to promote reaction of the carrier transporter (redox species) contained in porous insulating layer 42. While the method of forming such a catalyst layer 43 is not particularly limited, preferably electron beam evaporation, sputtering, or the like is used.

Further, the preferred form of catalyst layer 43 varies depending on the timing at which the dye is adsorbed on the porous semiconductor layer. Specifically, in the case where the dye is adsorbed on the porous semiconductor layer and thereafter catalyst layer 43 is formed, catalyst layer 43 may be of any form without particular limitation. In contrast, in the case where catalyst layer 43 is formed before the dye is adsorbed on the porous semiconductor layer, catalyst layer 43 is preferably in the form of a mesh having many holes, so that adsorption of the dye on the porous semiconductor layer is facilitated. Further, in order to increase the contact area with the redox species, catalyst layer 43 is preferably in the form of a porous material.

As a material forming catalyst layer 43, Group 8 elements such as Fe, Co, platinum group metals such as Ru, Rh, Pd, Os, Ir, Pt, carbons such as carbon black, Ketjen black, carbon nanotube, fullerene, and PEDOT/PSS (H) may be used. In the case where a highly-corrosive halogen-based redox species is used for the carrier transporter, however, preferably a material having a high corrosion resistance such as carbon compound or platinum is used for catalyst layer 43, for the sake of long-term stability.

### <Through Portion>

In the present embodiment, through portion 50 may be provided in second electrode 21 so that first insulating substrate 10 and second insulating substrate 20 contact each other through inter-cell insulating portion 15. In the present embodiment, through portion 50 is formed by partially removing second electrode 21. While through portion 50 is provided in second electrode 21 in the wet solar cell module of the present embodiment, the wet solar cell module of the present invention has a feature that through portion 50 is provided in one of or both the first electrode 11 and second electrode 21 included in photoelectric conversion device 30.

In the conventional dye-sensitized solar cell module as shown in Fig. 13, no through portion is provided in second electrode 121. Therefore, the material forming inter-cell sealing portion 117 is allowed to sink into porous second electrode 121 to thereby connect inter-cell insulator 116 and inter-cell sealing portion 117 through second electrode 121. Namely, inter-cell insulator 116 and inter-cell sealing portion 117 are used to connect first insulating substrate 110 and second insulating substrate 120.

In the dye-sensitized solar cell module of Fig. 13, however, the inter-cell insulator and the inter-cell sealing portion are connected through second electrode 121, not by chemical coupling but by physical contact only. The adhesion strength and the bond strength between first insulating substrate 110 and second insulating substrate 120 are thus insufficient. Accordingly, inter-cell insulator 116 and inter-cell sealing portion 117 are likely to peel off from the interfaces where they contact second electrode 121. Peeling at the interfaces causes the electrolytic solution to move between the cells, and the performance of the dye-sensitized solar cell module is prone to deterioration.

As for the wet solar cell module of the present embodiment, second electrode 21 has the through portion therein and thus contacts the components such as photoelectric conversion portion 40 and inter-cell insulator 16. Second electrode 21 and photoelectric conversion portion 40 are connected to each other by forming second electrode 21 on the porous material such as porous insulating layer 42 and catalyst layer 43. Photoelectric conversion portion 40 and second electrode 21 are thus in physical contact with each other. Accordingly, photoelectric conversion portion 40, namely porous insulating layer 42 and catalyst layer 43 adhere to second electrode 21. Further, second electrode 21 contacts inter-cell insulator 16 through the through portion formed in advance. In this way, inter-cell sealing portion 17 can directly be integrated with inter-cell insulator 16 through the through portion.

Since the present invention provides inter-cell sealing portion 17 in thorough portion 50 so that inter-cell sealing portion 17 is integrated with inter-cell insulator 16, peeling from the portion contacting second electrode 21, namely the interfaces with photoelectric conversion portion 40 and inter-cell sealing portion 17 for example can be suppressed. In particular, since peeling does not occur at the interface between second electrode 21 and inter-cell sealing portion 17, the electrolytic solution can be hindered from flowing between cells. Thus, a wet solar cell module exhibiting the cell performance which is less prone to deterioration and having excellent durability can be provided.

In the present embodiment, a plurality of first electrodes 11 which are spaced from each other with insulating portion 5 therebetween are formed on first insulating substrate 10. In contrast, second electrode 21 is not provided in such a manner that a plurality of second electrodes 21 that are spaced from each other with through portion 50 therebetween are provided on second insulating substrate 20. Namely, through portion 50 is formed by removing only a part of second electrode 21 so that electrical conduction of second electrode 21 is maintained. Through portion 50 in Fig. 1 only indicates that the material forming second electrode 21 is partially removed, rather than that second electrodes 21 are spaced from each other.

Insulating portion 5 between first electrodes 11 is formed for the purpose of ensuring electrical insulation between adjacent photoelectric conversion devices 30, and therefore different from "through portion" of the present invention. Here, a difference between "insulating portion" and "through portion" of the present invention lies in whether or not a remaining portion is formed. This difference will now be described below with reference to Fies. 2 and 3.

Fig. 2 is a schematic diagram showing the first electrode and the insulating portion provided on the first insulating substrate, and Fig. 3 is a schematic diagram showing the second electrode and the through portion provided on the second insulating substrate.

Insulating portion 5 in the present embodiment is provided for electrically insulating first electrodes 11 from each other included in a plurality of first electrodes 11 formed on first insulating substrate 10. Insulating portion 5 is therefore provided as shown in Fig. 2 so that it completely isolates first electrodes 11 from each other.

In contrast, through portion 50 in the present embodiment is provided in second electrode 21 for allowing inter-cell insulating portion 15 to contact second insulating substrate 20. It should be noted that a remaining portion 51 is provided as shown in Fig. 3 for preventing second electrode 21 from being divided by through portion 50.

Since remaining portion 51 is thus provided to prevent second electrode 21 from being divided, electrical connection between photoelectric conversion devices is not broken.

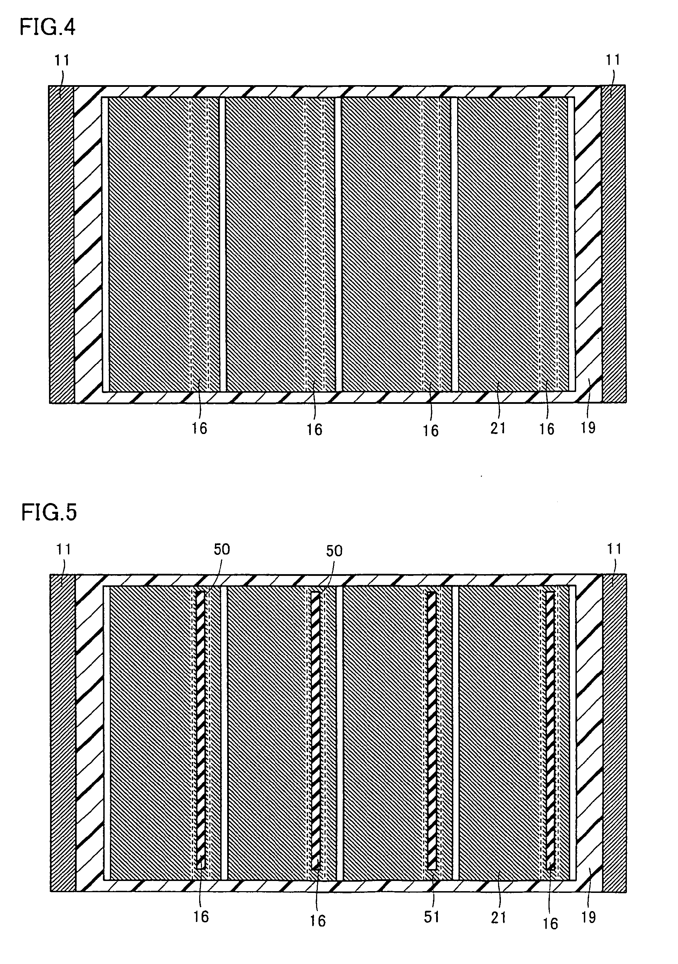

Fig. 4 is a schematic plan view of the wet solar cell module before the through portion is provided in the second electrode, as seen from the second electrode side.

When the wet solar cell module of the first embodiment without the second insulating substrate is seen from the above as shown in Fig. 4, second electrode 21 is provided above first electrode 11 and outer peripheral sealing layer 19 is provided around second electrode 21. Under the region defined by the dotted lines in second electrode 21, inter-cell insulator 16 is formed, and a part of second electrode 21 located on this inter-cell insulator 16 is removed to form through portion 50.

As the method of forming through portion 50, any conventionally-known method may be used as long as it can remove a part of second electrode 21. For example, a method that removes second electrode 21 with a laser, a method that removes second electrode 21 with a mechanical needle, a method that removes second electrode 21 by means of photolithography, a method that removes second electrode 21 by dry etching or wet etching, or the like may be used. In the case of photolithography and etching, a desired mask pattern may be applied, thereafter only a part to be removed of second electrode 21 may be exposed, and then etching may be performed to remove that part of second electrode 21.

The size of the through portion formed in second electrode 21 may be any as long as the through portion has a cross section that is sufficient to allow first insulating substrate 10 and second insulating substrate 20 to contact through inter-cell insulating portion 15.

Figs. 5 to 7 are each a schematic plan view showing an example of the wet solar cell module as seen from the second electrode 21 side, after through portion 50 is provided in second electrode 21 shown in Fig. 4 and before second insulating substrate 20 is attached. When the wet solar cell module of the first embodiment without the second insulating substrate is seen from above, it is preferable to form through portions 50 as shown in Figs. 5 to 7. The shape and size of through portions 50 are illustrated only by way of example.

As shown in Fig. 5, in a part of second electrode 21, through portion 50 is formed so that inter-cell insulator 16 is exposed. Since electrical connection between photoelectric conversion devices adjacent to each other is necessary, second electrode 21 preferably has remaining portion 51.

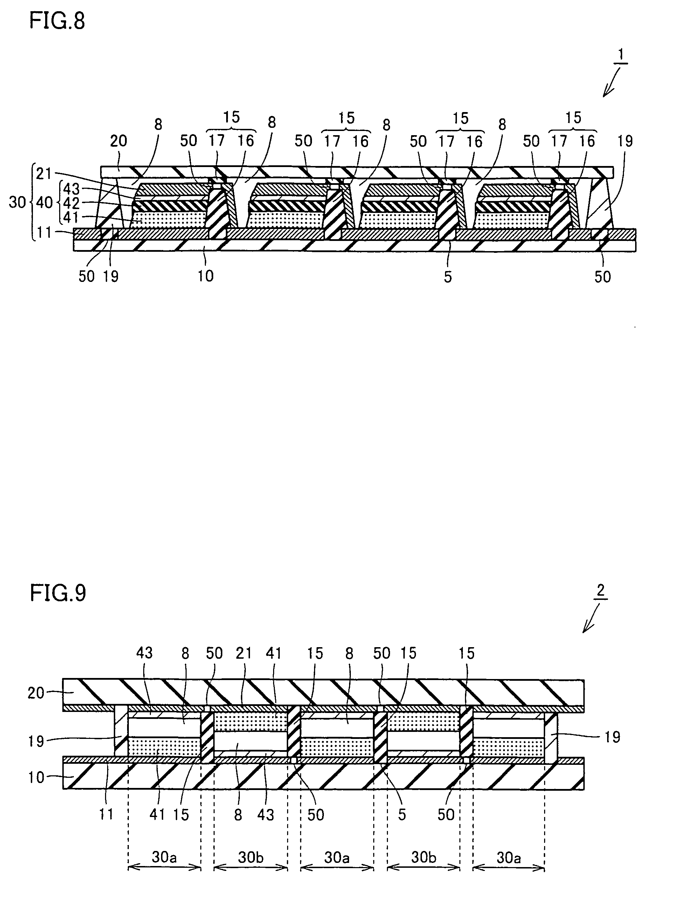

Further, through portion 50 may also be provided in a part of first electrode 11 I that is located directly below outer peripheral sealing layer 19 as shown in Fig. 8. which will be described herein later in connection with a wet solar cell module of a second embodiment. Through portion 50 can be provided at this position to connect first insulating substrate 10 and second insulating substrate 20 through inter-cell insulating portion 15 with higher reliability.

### <Carrier Transporter>

In the present embodiment, carrier transporter 8 is formed of a conductive material capable of transporting ions. Carrier transporter 8 is provided to fill the portion between first insulating substrate 10 and second insulating substrate 20 and is also included in porous insulating layer 42. Examples of such a conductive material may include an ionic conductor such as electrolytic solution and polyelectrolyte. An ionic conductor containing a redox electrolyte is preferably used as the conductive material. Examples of such a redox electrolyte may include for example metals such as iron-based and cobalt-based metals and halogen compounds such as chlorine, bromine, and iodine. In particular, iodine is generally used frequently. In the case where volatilization of the electrolytic solution is disadvantageous, a molten salt may be used instead of the solvent.

In the case where iodine is used as a redox species, any form of bromine may be used without particular limitation as long as it can be used for the battery or the like. Preferably, a combination of a metal iodide and bromine is used. Here, examples of the metal iodide may include lithium iodide, sodium iodide, potassium iodide, calcium iodide and the like. Further, in the above-described redox species, an imidazole salt such as dimethylpropyl imidazole iodide may be mixed.

Further, as the solvent used for the carrier transporter, carbonate compound such as propylene carbonate, nitrile compound such as acetonitrile, alcohol such as ethanol, as well as water, aprotic polar material, and the like may be used. Among them, a carbonate compound and a nitrile compound are preferably used, and a mixture of two or more different solvents of those listed above may also be used. In the case where the carrier transporter is a liquid, it may simply be called electrolytic solution, and the component contained in the electrolytic solution may be called electrolyte depending on the case. The concentration of the electrolyte varies depending on the type of the electrolyte to be used, and is preferably 0.01 to 1.5 mol/L.

### <Method of Manufacturing Z-Type Wet Solar Cell Module>

A method of manufacturing a Z-type wet solar cell module in Fig. 1 includes the steps of: forming a plurality of first electrodes 11 spaced from each other on first insulating substrate 10; forming inter-cell insulator 16 between the plurality of first electrodes 11 spaced from each other; forming, on above-described first electrodes I I each, photoelectric conversion portion 40 made up of photoelectric conversion layer 41 formed of a porous semiconductor layer carrying a dye, porous insulating layer 42 containing a carrier transporter, and catalyst layer 43; forming second electrode 21 from photoelectric conversion portion 40 through inter-cell insulator 16 onto adjacent first electrode 11 and; forming through portion 50 in second electrode 21; providing an uncured resin material through the through portion 50 formed on inter-cell insulator 16, placing second insulating substrate 20 on the uncured resin material, and thereafter curing the uncured resin material to form inter-cell sealing portion 17 and simultaneously fixing second insulating substrate 20; and forming outer peripheral sealing layer 19 along an outer periphery of the portion between first insulating substrate 10 and second insulating substrate 20.

### Second Embodiment

Fig. 8 is a schematic cross section showing a wet solar cell module in a second embodiment. The wet solar cell module of the present embodiment as shown in Fig. 8 is a Z-type wet solar cell module, and similar to the wet solar cell module of the first embodiment except that a through portion 50 is formed in first electrode 11 located directly below outer peripheral sealing layer 19.

Though portion 50 can thus be provided directly below outer peripheral sealing layer 19 to connect first insulating substrate 10 and second insulating substrate 20 through the inter-cell insulating portion with higher reliability.

### Third Embodiment

Fig. 9 is a schematic cross section showing a wet solar cell module in a third embodiment. Wet solar cell module 2 of the present embodiment as shown in Fig. 9 is a W-type wet solar cell module in which first photoelectric conversion devices 30a and second photoelectric conversion devices 30b are alternately arranged and spaced from each other, and three first photoelectric conversion devices 30a and two second photoelectric conversion devices 30b are included. In the case where first insulating substrate 10 and second insulating substrate 20 of the wet solar cell module in the present embodiment are both translucent, any one of first insulating substrate 10 and second insulating substrate 20 may be used as a light receiving surface, or the insulating substrates may both serve as light receiving surfaces. In the case where only first insulating substrate 10 is translucent, the first insulating substrate 10 side is a light receiving surface and the second insulating substrate 20 side is a non-light-receiving surface.

Here, in both first photoelectric conversion device 30a and second photoelectric conversion device 30b, first electrode 11, photoelectric conversion layer 41, carrier transporter 8, catalyst layer 43, and second electrode 21 that are stacked on first insulating substrate 10 in this order from the first electrode 11 side. In second photoelectric conversion device 30b, first electrode 11, catalyst layer 43, carrier transporter 8, photoelectric conversion layer 41, and second electrode 21 are stacked on first insulating substrate 10 in this order from the first electrode 11 side.

Wet solar cell module 2 of the present embodiment as shown in Fig. 9 has a structure as follows. First photoelectric conversion device 30a and second photoelectric conversion device 30b adjacent to each other share one of first electrode 11 and second electrode 21 and are accordingly electrically connected in series to each other. Between first photoelectric conversion device 30a and second photoelectric conversion device 30b adjacent to each other, inter-cell insulating portion 15 is formed. Along the outer periphery of the cells, outer peripheral sealing layer 19 is formed. In this way, the portions between the cells can be filled and sealed.

As clearly seen from Fig. 9, second electrode 21 of first photoelectric conversion device 30a and second electrode 21 of second photoelectric conversion device 30b adjacent to this first photoelectric conversion device are shared by these photoelectric conversion devices, and first electrode 11 of second photoelectric conversion device 30b and first electrode 11 of first photoelectric conversion device 30a which is adjacent to this second photoelectric conversion device are shared by these photoelectric conversion devices, so that the photoelectric conversion devices are connected in series. Through portions 50 are formed in first electrode 11 and second electrode 21 so that the through portions abut on inter-cell insulating portions 15 between first photoelectric conversion device 30a and second photoelectric conversion device 30b.

A description will be given below of only the components of those constituting the W-type wet solar cell module of the present embodiment that are different from corresponding components of those constituting the Z-type wet solar cell module of the first embodiment.

### <Through Portion>

The W-type wet solar cell module like the present embodiment has a feature that through portion 50 is provided in any one of first electrode 11 and second electrode 21 or through portions 50 are provided in both first electrode 11 and second electrode 21.

In order to electrically connect photoelectric conversion devices adjacent to each other, through portion 50 is required to leave a part of first electrode 11 and second electrode 21 as a remaining portion, and may be formed in a similar form to through portions 50 shown in above-described Figs. 5 to 7 for example. For such a through portion 50, it is sufficient that an area is left that is enough for contact between first insulating substrate 10 and second insulating substrate 20 through inter-cell insulating portion 15.

It is sufficient for the cross-sectional area of through portion 50 to leave an area that enables first insulating substrate 10 and second insulating substrate 20 to be connected to each other through inter-cell insulating portion 15. As the method of forming through portion 50 in first electrode 11, a similar method to the method of forming thorough portion 50 in second electrode 21 may be used.

### <Second Electrode>

Second electrode 21 is disposed on second insulating substrate 20 in order to electrically connect photoelectric conversion devices adjacent to each other. In the W-type wet solar cell module of the present embodiment, electrical connection is made, not by contact between first electrode 11 and second electrode 21 like the Z-type wet solar cell module, but by sharing of second electrode 21 between photoelectric conversion devices 30 adjacent to each other.

### <Inter-Cell Insulating Portion>

In the present embodiment, inter-cell insulating portion 15 is not necessarily limited to an inorganic oxide only, as long as inter-cell insulating portion 15 ensures insulation between first photoelectric conversion device 30a and second photoelectric conversion device 30b and can block passage of redox species, and may thus be a photosensitive resin or a thermosetting resin.

In the wet solar cell module of the present embodiment as shown in Fig. 9, inter-cell insulating portion 15 is formed of an inter-cell sealing portion only. Inter-cell insulating portion 15, however, may be formed of an inter-cell insulating portion and an inter-cell sealing portion.

### <Porous Insulating Layer>

In the W-type wet solar cell module, the porous insulating layer used for the Z-type wet solar cell module may not necessarily be provided, and it is sufficient that carrier transporter 8 is provided. Even in the case where the porous insulating layer is disposed on photoelectric conversion layer 41, the porous insulating layer contains the carrier transporter and contact between photoelectric conversion layer 41 and catalyst layer 43 can be suppressed, which is thus more preferable.

In the W-type wet solar cell module, the order in which photoelectric conversion layer 41 and carrier transporter 8 are arranged may be reversed. Further, even in the case where the porous insulating layer is provided, the order in which photoelectric conversion layer 41 and the porous insulating layer are arranged may be reversed.

### <Method of Manufacturing W-Type Wet Solar Cell Module>

A method of manufacturing a wet solar cell module of the present embodiment is characterized by that: first photoelectric conversion device 30a including first electrode 11, photoelectric conversion layer 41, carrier transporter 8, catalyst layer 43, and second electrode 21 that are stacked in order on translucent first insulating substrate 10, second photoelectric conversion device 30b including first electrode 11, catalyst layer 43, carrier transporter 8, photoelectric conversion layer 41, and second electrode 21 that are stacked in this order on translucent first insulating substrate 10, and second insulating substrate 20 on second electrode 21 of first photoelectric conversion device 30a and on second electrode 21 of second photoelectric conversion device 30b, are provided and, between translucent first insulating substrate 10 and second insulating substrate 20, one or more first photoelectric conversion devices 30a and one or more second photoelectric conversion devices 30b are alternately arranged in parallel, and the step of electrically connecting in series first photoelectric conversion device 30a and second photoelectric conversion device 30b adjacent to each other is included.

Further, after through portion 50 is formed in second electrode 21, this through portion 50 is filled with an uncured resin material. After second insulating substrate 20 is disposed on the uncured resin material, the uncured resin material is cured to form inter-cell insulating portion 15. Preferably, first insulating substrate 10 and second insulating substrate 20 are then secured and outer peripheral sealing layer 19 is formed along the outer periphery of the portion between first insulating substrate 10 and second insulating substrate 20 attached to each other.

### Fourth Embodiment

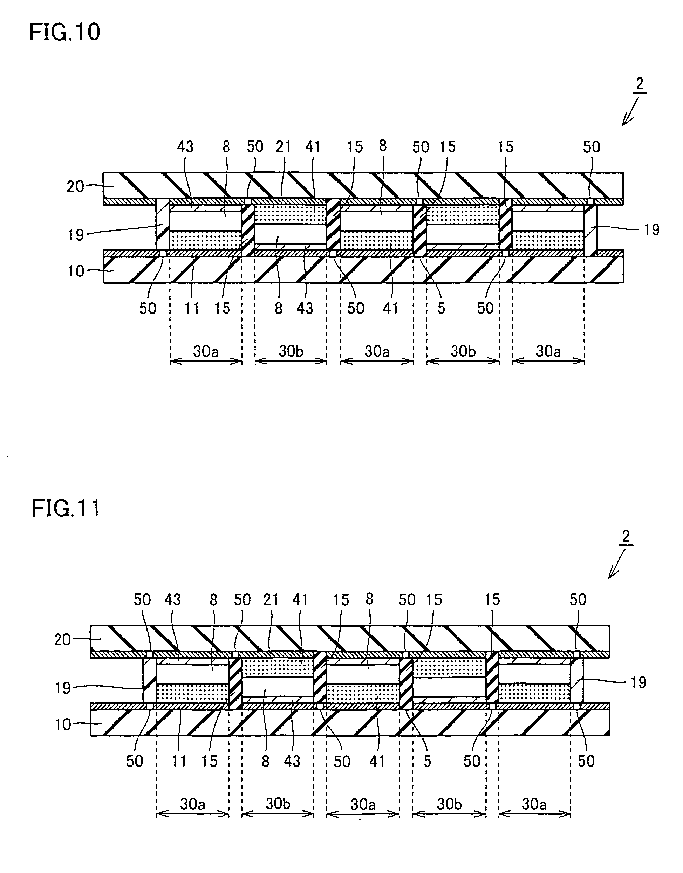

Fig. 10 is a schematic cross section showing a wet solar cell module in a fourth embodiment. The wet solar cell module of the present embodiment as shown in Fig. 10 is similar to the wet solar cell module of the third embodiment except that through portions are formed respectively in first electrode 11 that is located directly below outer peripheral sealing layer 19 (on the left side in Fig. 10) of the wet solar cell module of the third embodiment and in second electrode 21 that is located directly above outer peripheral sealing layer 19 (on the right side in Fig. 10) thereof.

Though portions 50 can thus be provided at these positions to allow first insulating substrate 10 and second insulating substrate 20 to contact each other through the inter-cell insulating portion with higher reliability.

### Fifth Embodiment

Fig. 11 is a schematic cross section showing a wet solar cell module in a fifth embodiment. The wet solar cell module of the present embodiment as shown in Fig. 11 is similar to the wet solar cell module of the third embodiment except that through portions 50 are formed in first electrode 11 and second electrode 21 that contact outer peripheral sealing layer 19 located at the outermost portion of the wet solar cell module of the third embodiment.

Though portions 50 can thus be provided at these positions to allow first insulating substrate 10 and second insulating substrate 20 to contact each other with higher reliability.

### <EXAMPLES>

### Example 1

For Example 1, a Z-type wet solar cell module shown in Fig. 1 was fabricated. First, a glass substrate with an SnO₂ film (trade name: glass with SnO₂ film (manufactured by Nippon Sheet Glass Co., Ltd.)) of 60 mm long × 36 mm wide was prepared. Here, the glass substrate corresponds to first insulating substrate 10.

The SnO₂ film which was a conductive film on a surface of this first insulating substrate 10 was cut, by means of laser scribing, lengthwise at parallel positions which were specifically a position of 9.5 mm from the left end of first insulating substrate 10 and, relative to this position, three positions at intervals of 6.5 mm, to form insulating portions 5 of 100 µm in width and first electrodes 11 of Sn02.

Next, on thus formed insulating portions 5, a paste containing SiO₂ was applied so that the paste extended slightly sideways from insulating portion 5 onto first electrodes 11, by means of a screen printing machine (LS-34TVA (manufactured by Newlong Seimitsu Kogyo Co., Ltd.)). After this, the paste containing SiO₂ was baked at 500°C for 60 minutes to form dense inter-cell insulator 16. This inter-cell insulator 16 was 28 µm in thickness, 0.6 mm in width, and 60 mm in length.

Next, on a part of first electrodes 11 on which inter-cell insulator 16 was not formed, a titanium oxide paste having an average particle size of 13 nm (trade name: Ti-Nanoxide D/SP (manufactured by Solaronix SA)) was applied by means of the screen printing machine. The titanium oxide paste was then baked at 500°C for 60 minutes to form a porous semiconductor layer of 15 µm in thickness.

Regarding the above-described porous semiconductor layer, one porous semiconductor layer having a size of 5 mm in width and 50 mm in length was formed so that its center position is located at a position of 6.4 mm from the left end of first insulating substrate 10. Further, at intervals of 6.5 mm relative to the center of this leftmost porous semiconductor layer, three porous semiconductor layers of a similar size were formed. In this way, four porous semiconductor layers were formed on first electrodes 11 of first insulating substrate 10.

Next, on the porous semiconductor layers, a paste containing zirconia particles having an average particle size of 50 nm was applied by means of the screen printing machine. After this, the paste was baked at 500°C for 60 minutes to form porous insulating layer 42 whose planer portion has a thickness of 7 µm. Regarding this porous insulating layer 42, one porous insulating layer 42 having a size of 5.2 mm in width and 50 mm in length was formed at a position of 6.6 mm from the left end of first insulating substrate 10 and, relative to the center of this porous insulating layer 42, three porous insulating layers 42 of a similar size were formed at intervals of 6.5 mm.

Next, on the above-described porous insulating layers 42, catalyst layer 43 formed of a Pt film of 50 nm in thickness was formed by means of an electron beam evaporation machine. Then, on catalyst layer 43, inter-cell insulator 16, and first electrodes 11 of adjacent photoelectric conversion device 30, second electrode 21 formed of a Ti film of 300 nm in thickness was formed by means of the electron beam evaporation machine.

Next, laser scribing was used to remove a part of second electrode 21 until inter-cell insulator 16 was exposed to thereby form through portion 50 (0.4 mm in width × 45 mm in length) shown in Fig. 5.

Next, in ethanol (manufactured by Aldrich Chemical Company), N719 having the chemical formula below (trade name: Ru535bisTBA (manufactured by Solaronix SA)) was dissolved so that the concentration was 3×10⁻⁴ mol/L to thereby prepare a dye adsorption solution.

Then, in the dye adsorption solution thus prepared, first insulating substrate 10 having the porous semiconductor layers made of titanium oxide was immersed for 120 hours to allow the dye to be adsorbed on the porous semiconductor layers. After this, first insulating substrate 10 removed from the dye adsorption solution was washed with ethanol (manufactured by Aldrich Chemical Company) and dried to form photoelectric conversion layer 41.

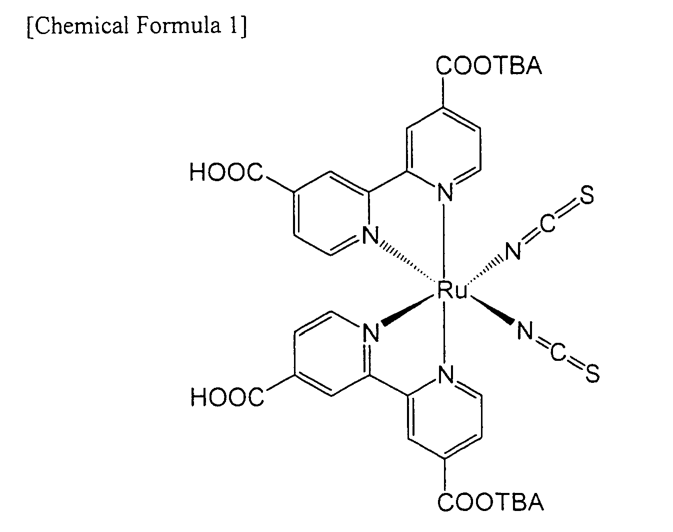

Next, a photosensitive resin (31X-101 (manufactured by ThreeBond Co., Ltd)) was applied via through portion 50 formed in second electrode 21, by means of a dispenser (Ultrasaver (manufactured by EFD Inc.)), and second insulating substrate 20 (56 mm long × 32 mm wide) was attached to the sealing resin. An ultraviolet lamp (Novacure (manufactured by EFD Inc.)) was used to apply UV radiation to thereby cure the photosensitive resin and form inter-cell sealing portion 17, and fix second insulating substrate 20. Inter-cell sealing portion 17 was 0.4 mm in width.

After this, a photosensitive resin was applied along the periphery of first insulating substrate 10 and second insulating substrate 20, an ultraviolet lamp similar to that used for forming inter-cell sealing portion 17 was used to cure the photosensitive resin and thereby form outer peripheral sealing portion 19.

Next, a redox electrolytic solution used for carrier transporter 8 was prepared by dissolving, in acetonitrile (manufactured by Aldrich Chemical Company), lithium iodide (manufactured by Aldrich Chemical Company) with a concentration of 0.1 mol/L, iodine (manufactured by Aldrich Chemical Company) with a concentration of 0.01 mol/L, TBP (manufactured by Aldrich Chemical Company) with a concentration of 0.5 mol/L, and dimethylpropyl imidazole iodide (trade name: DMPII (manufactured by Shikoku Chemicals Corporation)) with a concentration of 0.6 mol/L. Then, the above-described redox electrolytic solution was injected by utilizing the capillary effect from an electrolytic solution injection port (not shown) formed in second insulating substrate 20 at a position on each photoelectric conversion device 30.

Then, the above-described electrolytic solution injection port was sealed with resin to obtain the wet solar cell module of Example 1.

### Comparative Example 1

For Comparative Example 1, through portions 50 were not formed in the second electrode, unlike the wet solar cell module of Example 1. Except for this, a wet solar cell module of Comparative Example 1 was fabricated through a similar process to Example 1.

### Example 2

For Example 2, a wet solar cell module shown in Fig. 8 was fabricated by a similar method to Example 1, except that the step of forming through portion 50 in first electrode 11 at a position directly below outer peripheral sealing layer 19 was included, in addition to the steps of the process for manufacturing the wet solar cell module of

### Example 1.

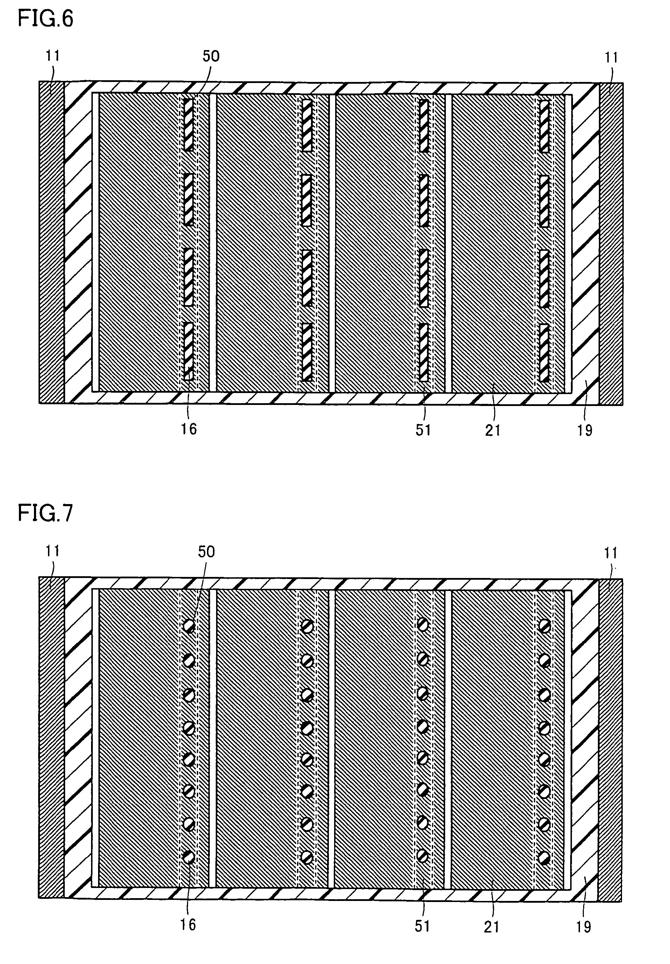

In the wet solar cell module of Example 2, four through portions 50 of 0.4 mm in width × 10 mm in length as shown in Fig. 6 were formed at intervals of 0.125 mm, from the position of 0.1 mm from the longer side of the outermost photoelectric conversion device.

### Example 3

For Example 3, a wet solar cell module of Example 3 was fabricated by a similar method to Example 1 except that, in the step of forming the through portion in second electrode 21 in the process of manufacturing the wet solar cell module of Example 1, four through portions 50 (0.4 mm in width × 10 mm in length) of the shape shown in Fig. 6 were formed at intervals of 0.125 mm.

### Example 4

For Example 4, a wet solar cell module of Example 4 was fabricated by a similar method to Example 1 except that, in the step of forming the through portion in second electrode 21 in the process of manufacturing the wet solar cell module of Example 1, eight through portions 50 (circular with a diameter of 0.4 mm) of the shape shown in Fig. 7 were formed at intervals of 0.1 mm.

### Example 5

For Example 5, a W-type wet solar cell module was fabricated. In the wet solar cell module of Example 5, as shown in Fig. 9, first photoelectric conversion devices 30a and second photoelectric conversion devices 30b are formed alternately. In the following, a method of manufacturing this wet solar cell module will be described.

First, a glass substrate with an SnO₂ film (trade name: glass with SnO₂ film (manufactured by Nippon Sheet Glass Co., Ltd.)) of 53 mm long × 65 mm wide was used as first insulating substrate 10 on which first electrode 11 was formed, and a glass substrate with an SnO₂ film (trade name: glass with SnO₂ film (manufactured by Nippon Sheet Glass Co., Ltd.)) of 39 mm long × 65 mm wide was used as second insulating substrate 20 on which second electrode 21 was formed.

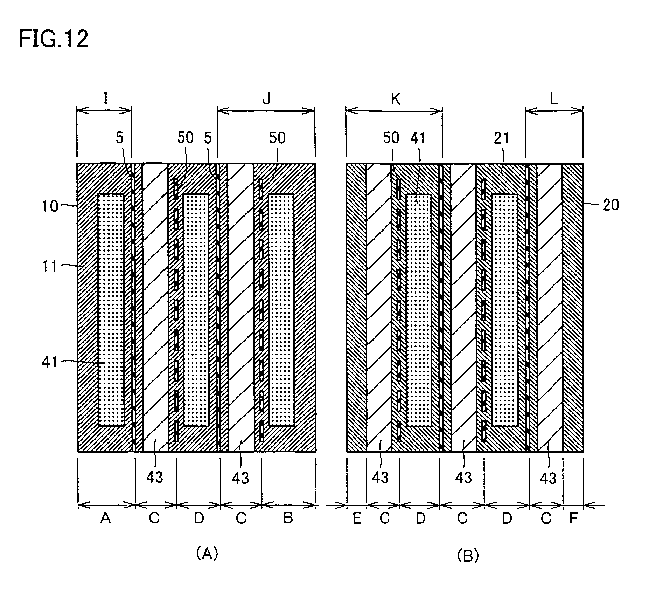

Fig. 12 (A) is a diagram showing each layer formed on first insulating substrate 10 as seen from above, and Fig. 12 (B) is a diagram showing each layer formed on second insulating substrate 20 as seen from above.

On first electrode 11 and second electrode 21, catalyst layer 43 was formed so that A, B, C, D, E, and F in Fig. 12 were respectively 18 mm, 18 mm, 5 mm, 7 mm, 5 mm, and 5 mm. This catalyst layer 43 was formed by means of sputtering so that Pt was deposited to a film thickness of approximately 5 nm.

Next, on first electrode 11 and second electrode 21 (the portion indicated by "41" in Fig. 12), a porous semiconductor layer was formed. The porous semiconductor layer was formed by using the titanium oxide paste (trade name: D/SP (manufactured by Solaronix SA)) used for Example 1, using a screen printing machine (trade name: LS-150 (manufactured by Newlong Seimitsu Kogyo Co., Ltd.)) to apply the paste on first electrode 11 and second electrode 21 so that the shape after baked was 5 mm in width × 50 mm in length × 15 µm in thickness, and thereafter performing leveling at room temperature for one hour, drying in an oven of 80°C, and baking in the air at a temperature of 500°C.

Next, insulating portion 5 was formed so that I, J, K, and L in Fig. 12 were respectively 17.5 mm, 23.5 mm, 16.5 mm, and 10.5 mm. This insulating portion 5 was formed by applying a laser beam (YAG laser) with a fundamental wavelength of 1.06 µm to first electrode 11 and second electrode 21 made of SnO₂ to evaporate SnO₂.

Further, to first electrode 11 and second electrode 21, the laser beam (YAG laser) with the fundamental wavelength was applied to form nine through portions 50 of 5 mm in width × 8 mm in length at intervals of 0.3 mm (Fig. 12).

Next, N719 (trade name: Ru535bisTBA (manufactured by Solaronix SA)) used for Example 1 was dissolved in ethanol (manufactured by Aldrich Chemical Company) so that the concentration was 3×10⁻⁴ mol/L to prepare a dye adsorption solution.

Then, in thus prepared dye adsorption solution, first insulating substrate 10 and second insulating substrate 20 having the porous semiconductor layer were immersed for 120 hours to allow the dye to be adsorbed on the porous semiconductor layer. After this, first insulating substrate 10 and second insulating substrate 20 removed from the dye adsorption solution were washed with ethanol (manufactured by Aldrich Chemical Company) and dried to form photoelectric conversion layer 41.

Next, on through portions 50 and insulating portions 5 in first insulating substrate 10 and second insulating substrate 20 obtained in the above-described process steps, an ionomer resin (Himilan 1855 (manufactured by DuPont)) which was cut in the size 1 mm × 60 mm was mounted as inter-cell insulating portion 15. Then, first insulating substrate 10 and second insulating substrate 20 were attached to each other and heated in an oven of approximately 100°C for 10 minutes to be accordingly pressure-bonded, so that they had the form of the wet solar cell module in Fig. 9.

Next, as a redox electrolytic solution used for carrier transporter 8, two different electrolytic solutions (electrolytic solution A and electrolytic solution B) were prepared.

Electrolytic solution A was prepared by dissolving, in acetonitrile (manufactured by Aldrich Chemical Company), lithium iodide (manufactured by Aldrich Chemical Company) with a concentration of 0.1 mol/L, iodine (manufactured by Kishida Chemical Co., Ltd.) with a concentration of 0.02 mol/L, TBP (manufactured by Aldrich Chemical Company) with a concentration of 0.5 mol/L, and dimethylpropyl imidazole iodide (trade name: DMPII (manufactured by Shikoku Chemicals Corporation)) with a concentration of 0.6 mol/L. The concentration of iodine in this electrolytic solution A is represented herein by "M2."

Electrolytic solution B was prepared through a similar process to Electrolytic solution A except that the concentration of iodine in the above composition of the electrolytic solution A was made higher (iodine concentration was changed from 0.02 mol/L to 0.05 mol/L). The iodine concentration in this electrolytic solution B is represented herein by "M1." Namely, the ratio between the iodine concentrations M1/M2 was 2.5 and within a range of 5 to 1.

To first photoelectric conversion device 30a of the dye-sensitized solar cell module in this Example, electrolytic solution B was injected and, to second photoelectric conversion device 30b, electrolytic solution A was injected, each by utilizing the capillary effect. After this, the peripheral portion of the cells was sealed with an epoxy resin to obtain the dye-sensitized solar cell module of Example 5,

### Comparative Example 2

For Comparative Example 2, through portions 50 were not formed in the first electrode and the second electrode, unlike the wet solar cell module of Example 5. Except for this, a wet solar cell module of Comparative Example 2 was fabricated through a similar process to Example 5.

### Example 6

For Example 6, a wet solar cell module shown in Fig. 10 was fabricated by a similar method to Example 5 except that, in addition to the steps of the process for manufacturing the wet solar cell module of Example 5, the step was included of forming through portions 50 in first electrode 11 at a position directly below outer peripheral sealing layer 19 on the left side in Fig. 10 and in second electrode 21 at a position directly above outer peripheral sealing layer 19 on the right side in Fig. 10.

Namely, as shown in Fig. 10, insulating portion 5 was formed at a position opposite to the position where through portion 50 was formed in first electrode 11, and insulating portion 5 was formed at a position opposite to the position where through portion 50 was formed in second electrode 21.

Through portions 50 formed here have the same shape as through portions 50 shown in Fig. 12, namely through portions 50 of 5 mm in width × 8 mm in length were formed at intervals of 0.3 mm.

### Example 7

For Example 7, a wet solar cell module shown in Fig. 11 was fabricated by a similar method to Example 5 except that, in addition to the steps of the process for manufacturing the wet solar cell module of Example 5, the step of forming through portions 50 in first electrode 11 and second electrode 21 that are located at the opposite ends of outer peripheral sealing layer 19 on the left side in Fig. 11.

Through portions 50 formed here have the same shape as through portions 50 shown in Fig. 12, namely through portions 50 of 5 mm in width × 8 mm in length were formed at intervals of 0.3 mm.

### Example 8

For Example 8, in the step of forming the second electrode in the process of manufacturing the wet solar cell module of Example 1, a screen with a pattern designed in advance so that through portions shown in Fig. 5 were formed was used and, by means of a screen printing machine (name of the machine: LS-34TVA (manufactured by Newlong Seimitsu Kogyo Co., Ltd.)), an ITO paste was applied on first electrode 11. The applied ITO paste was baked to form second electrode 21 formed of an ITO porous layer of 1 µm in thickness. As this ITO paste, the paste prepared by the following method was used.

First, to 30g of ITO nanoparticles (manufactured by C. I. Kasei Co., Ltd.) with an average particle size of 30 nm, 5 ml of acetic acid was added, and they were stirred in a mortar for five minutes. Next, the step of adding 5 ml of water and stirring them for one minute was repeated five times, and further, the step of adding 5 ml of ethanol and stirring them for one minute was repeated 15 times. Then, the step of adding 18 ml of ethanol and stirring them in the mortar for one minute was repeated six times.

The paste thus prepared was transferred to a beaker using 500 ml of ethanol. After this, it was stirred with a stirrer for two minutes and thereafter 100 g of termpineol was added. After it was stirred with the stirrer for two minutes, an ultrasonic treatment for two seconds was performed 60 times at intervals of two seconds, and thereafter it was stirred again with the stirrer for two minutes.

30-50 mPas at 5% in toluene:ethanol/80:20 258C #46 080, ethyl cellulose of Fluka was added, thereafter an ethanol solution was added so that the ethyl cellulose was 10% by mass, and it was further stirred with a stirrer for two minutes.

Next, an ultrasonic treatment for two seconds was performed 180 times at intervals of two seconds, and thereafter it was stirred again with a stirrer for two minutes. After this, an evaporator was used to evaporate the ethanol and a three-roll treatment was performed to prepare the intended ITO paste.

The wet solar cell module shown in Fig. 8 was thus fabricated by a similar method to Example 1, except that the screen printing method was used to form the second electrode as described above.

### <Conversion Efficiency>

The dye-sensitized solar cell modules fabricated for Examples 1 to 8 and Comparative Examples 1 and 2 were each placed with the second insulating substrate side on a black stage controlled to a temperature of 25°C, so that the first insulating substrate served as a light receiving surface. Then, the conversion efficiency (Eff (%)) of the wet solar cell module was measured immediately after simulated sunlight of AM 1.5 (solar simulator) was applied to the first insulating substrate, and the conversion efficiency (Eff (%)) of the wet solar cell module was also measured after simulated sunlight of AM 1.5 was continuously applied for 100 hours, and the measured values were organized in Table 1.

**Table 1**

| | Structure | Form of Through Portion | Eff(%) immediately after irradiation | Eff(%) after 100 hrs from irradiation with light of AM 1.5 | Occurrence of Peeling after 100 hrs from irradiation with light of AM 1.5 |
|---|---|---|---|---|---|
| Example 1 | Z type | Fig. 5 | 4.23 | 4.2 | No peeling occurred |
| Example 2 | Z type | Fig. 6 | 4.23 | 4.2 | No peeling occurred |
| Example 3 | Z type | Fig. 6 | 4.23 | 4.19 | No peeling occurred |
| Example 4 | Z type | Fig. 7 | 4.21 | 4.2 | No peeling occurred |
| Comparative Example 1 | Z type | No Drawing | 4.22 | 3.4 | Peeling occurred |
| Example 5 | W type | Fig. 5 | 4.82 | 4.74 | No peeling occurred |
| Example 6 | W type | Fig. 5 | 4.81 | 4.76 | No peeling occurred |
| Example 7 | W type | Fig. 5 | 4.82 | 4.5 | No peeling occurred |
| Example 8 | Z type | Fig. 5 | 4.2 | 4.22 | No peeling occurred |
| Comparative Example 2 | W type | No Drawing | 4.82 | 3.61 | Peeling occurred |

As shown in Table 1, there was no large difference between respective conversion efficiencies of the wet solar cell modules of Examples 1 to 8 and Comparative Examples 1 and 2 immediately after application of the simulated sunlight, and substantially identical characteristics were obtained from the modules. In contrast, it has been revealed that, regarding the conversion efficiencies after the simulated sunlight was applied for 100 hours, the wet solar cell modules of Examples 1 to 8 are significantly excellent relative to the wet solar cell modules of Comparative Examples 1 and 2.

The electrolytic solution of the carrier transporter in the wet solar cell modules of Comparative Examples 1 and 2 each after the simulated sunlight was applied for 100 hours was observed with a microscope. It was confirmed that the electrolytic solution was present in the inter-cell insulating portion. The reason for this is considered as follows. In the wet solar cell modules of Comparative Examples 1 and 2, separation at the inter-cell insulating portion between the cells is insufficient and contact between the first insulating substrate and the second insulating substrate is weak.

It is clear from the above-described results that, a through portion provided in one of the first and second electrodes or through portions provided in both the first and second electrodes, like the wet solar cell module of the present invention, can make peeling between the layers in the wet solar cell module unlikely to occur, and thus a wet solar cell module that is excellent in durability can be provided.

It should be construed that embodiments and examples disclosed herein are by way of illustration in all respects, not by way of limitation. It is intended that the scope of the present invention is defined by claims, not by the above description, and encompasses all modifications and variations equivalent in meaning and scope to the claims.

### INDUSTRIAL APPLICABILITY

The wet solar cell module of the present invention is applicable to a home solar cell system, a system for a power plant, and the like.

### REFERENCE SIGNS LIST

1, 2 wet solar cell module; 101, 202, 302 dye-sensitized solar cell module; 5 insulating portion; 8 carrier transporter; 10, 110, 210, 310 first insulating substrate; 11, 111, 211, 311, 311 a first electrode; 15, 215 inter-cell insulating portion; 16, 116, 316 inter-cell insulator; 17, 117 inter-cell sealing portion; 19, 219 outer peripheral sealing layer; 20, 120, 220, 320 second insulating substrate; 21, 121, 221, 321, 321a second electrode; 30 photoelectric conversion device; 30a, 230a first photoelectric conversion device; 30b, 230b second photoelectric conversion device; 40 photoelectric conversion portion; 41, 141, 241 photoelectric conversion layer; 42, 142 porous insulating layer; 242 electrolyte layer; 43, 143, 243 catalyst layer; 50 through portion; 51 remaining portion; 108 electrolyte; 119 outer peripheral portion; 308 electrolyte solution; 319 liquid sealing material; 341 dye-sensitized semiconductor electrode; 343 counter electrode

## Claims

1. A wet solar cell module (1) comprising two or more photoelectric conversion devices (30) spaced from each other and sandwiched between a first insulating substrate (10) and a second insulating substrate (20),
said photoelectric conversion devices (30) each being constituted of a first electrode (11), a photoelectric conversion portion (40), and a second electrode (21),
an inter-cell insulating portion (15) being provided between said spaced and sandwiched photoelectric conversion devices (30),
in at least one of said first electrode (11) and said second electrode (21), a through portion (50) being provided,
said through portion (50) being filled with a material of said inter-cell insulating portion (15), and
said first insulating substrate (10) and said second insulating substrate (20) being connected by said inter-cell insulating portion (15), through at least a part of a portion between said first insulating substrate (10) and said second insulating substrate (20) without said first electrode (11) or said second electrode (21) interposed.

2. The wet solar cell module (1) according to claim 1, wherein an inside of said through portion (50) is filled with the material forming said inter-cell insulating portion (15).

3. The wet solar cell module (1) according to claim 1 or 2, wherein said photoelectric conversion portion (40) contacts said inter-cell insulating portion (15).

4. The wet solar cell module (1) according to any of claims 1 to 3, wherein
in said photoelectric conversion device (30), the first electrode (11), the photoelectric conversion portion (40), and the second electrode (21) are stacked in this order on said first insulating substrate (10),
said photoelectric conversion portion (40) is made up of a photoelectric conversion layer (41), a porous insulating layer (42) containing a carrier transporter (8), and a catalyst layer (43),
said photoelectric conversion layer (41) is a porous semiconductor layer carrying a dye,
said photoelectric conversion layer (41), said porous insulating layer (42) containing the carrier transporter (8), and said catalyst layer (43) are stacked in this order from said first electrode (11), and
in a space surrounded by said first insulating substrate (10), said second insulating substrate (20), and said inter-cell insulating portion (15), the carrier transporter (8) is provided.

5. The wet solar cell module (1) according to any of claims 1 to 4, wherein
of two said photoelectric conversion devices (30) adjacent to each other,
one photoelectric conversion device (30) has said second electrode (21) contacting said first electrode (11) of the other photoelectric conversion device (30).

6. The wet solar cell module (1) according to any of claims 1 to 3, wherein
said photoelectric conversion devices (30) include at least one first photoelectric conversion device (30a) and at least one second photoelectric conversion device (30b) arranged alternately and spaced from each other,
said first photoelectric conversion device (30a) and said second photoelectric conversion device (30b) each include a first electrode (11), a photoelectric conversion portion (40), and a second electrode (21) stacked in this order on said first insulating substrate (10),
in the photoelectric conversion portion (40) of said first photoelectric conversion device (30a), a photoelectric conversion layer (41), a carrier transporter (8), and a catalyst layer (43) are stacked in this order from said first electrode (11), and
in the photoelectric conversion portion (40) of said second photoelectric conversion device (30b), a catalyst layer (43), a carrier transporter (8), and a photoelectric conversion layer (41) are stacked in this order from said first electrode (11).

7. The wet solar cell module (1) according to claim 6, wherein said first photoelectric conversion device (30a) and said second photoelectric conversion device (30b) adjacent to said first photoelectric conversion device (30a) are electrically connected in series by said first electrode (11) or said second electrode (21).

8. The wet solar cell module (1) according to any of claims 1 to 7, wherein said second electrode (21) is made of a material having corrosion resistance against said carrier transporter (8).

9. The wet solar cell module (1) according to any of claims 1 to 8, wherein said second electrode (21) is made of at least one metal selected from the group consisting of Ti, Ni, and Au, a compound containing at least one metal selected from said group of metals, fluorine-doped tin oxide, or ITO.

10. The wet solar cell module (1) according to any of claims 1 to 9, wherein an outer peripheral sealing layer (19) is formed along an outer peripheral portion of two or more said photoelectric conversion devices (30) and between said first insulating substrate (10) and said second insulating substrate (20).

11. The wet solar cell module (1) according to any of claims 1 to 10, wherein said inter-cell insulating portion (15) includes at least an inter-cell sealing portion (17).

12. The wet solar cell module (1) according to any of claims 1 to 11, wherein said inter-cell insulating portion (15) is made up of an inter-cell insulator (16) and an inter-cell sealing portion (17).
